# DEMANDE DE BREVET EUROPEEN

(11) **EP 1 716 984 A1**
(43) Date de publication de la demande: **02.11.2006**
(21) Numéro de dépôt: 05103321.5
(22) Date de dépôt: 25.04.2005
(51) Int. Cl.: B25J 17/02, B23K 26/10, B05B 13/04, F16M 11/12, F16M 11/18

(54) **Dispositif d'entraînement d'un objet suivant des mouvements de rotation combinés**

(71) Demandeur: Mougin, Jean-Jacques, 2300 La Chaux-de-Fonds (CH)
(72) Inventeur: Mougin, Jean-Jacques, 2300 La Chaux-de-Fonds (CH)
(74) Mandataire: GLN

(57) **Abrégé**

L'invention concerne un dispositif d'entraînement d'un objet (1) suivant au moins deux mouvements de rotation combinés. Ce dispositif comporte un premier arbre (13) creux tournant d'axe X1 portant une première surface de sortie orientée perpendiculairement à un axe X2 coupant l'axe X1 en définissant un angle α. Le dispositif comporte également un deuxième arbre (32) tournant d'axe X1, agencé à l'intérieur du premier arbre. Le deuxième arbre porte une deuxième surface de sortie comprenant un premier engrenage (37). Un support (8) est monté libre en rotation sur la première surface de sortie et présente une première surface d'entrée, symétrique par rapport à l'axe X2 et portant un deuxième engrenage (38). Ce dernier est agencé relativement au premier engrenage de manière qu'une rotation du deuxième arbre entraîne la rotation du support (8) par rapport à l'axe X2, le support portant en outre une deuxième surface de sortie (10) sur laquelle est agencé l'objet entraîné suivant au moins deux mouvements de rotation combinés. Dans un mode de réalisation préféré, le dispositif comporte un troisième arbre (42) pour permettre d'entraîner l'objet dans un mouvement de rotation sur lui-même.

## Description

### Domaine technique

La présente invention se rapporte au domaine des mouvements mécaniques, en particulier rotatifs, lorsqu'ils sont mis en oeuvre dans la construction mécanique, dans l'automatisation ou la robotisation d'appareillages, notamment d'usinage.

Plus précisément, la présente invention concerne un dispositif d'entraînement d'un objet suivant au moins deux mouvements de rotation combinés.

### Etat de la technique

La mise en application actuelle de mouvements rotatifs complexes, notamment par la mise en oeuvre de dispositifs d'angulation par liens mécaniques, nécessite la construction de structures encombrantes, d'unités complexes dissociées les unes des autres impliquant des risques de collisions, des problèmes de rigidité ainsi que des dysfonctionnements inhérents à la lourdeur des éléments mécaniques constitutifs de ces dispositifs. En outre, les angles des mouvements sont souvent trop limités pour certaines applications spécifiques.

### Exposé de l'invention

La présente invention a pour but d'améliorer les dispositifs connus de l'art antérieur en palliant aux problèmes susmentionnés.

Dans ce but, l'invention concerne un dispositif d'entraînement du type mentionné plus haut, caractérisé par le fait qu'il comporte un premier arbre creux d'axe X1 destiné à être entraîné en rotation par rapport à cet axe par des premiers moyens moteur. Le premier arbre présente une première extrémité libre portant une première surface de sortie sensiblement plane, de contour général circulaire, et orientée perpendiculairement à un axe X2 coupant l'axe X1 en définissant un angle α.

Le dispositif comporte également un deuxième arbre d'axe X1, agencé à l'intérieur du premier arbre et destiné à être entraîné par des deuxièmes moyens moteur pour tourner par rapport à l'axe X1, indépendamment du premier arbre. Le deuxième arbre comprend une deuxième extrémité libre portant une deuxième surface de sortie présentant des premiers moyens de liaison mécanique.

De plus, le dispositif comporte un support monté libre en rotation sur la première surface de sortie et présentant une première surface d'entrée, symétrique par rapport audit axe X2 et portant des deuxièmes moyens de liaison mécanique. Ces derniers sont agencés relativement aux premiers moyens de liaison mécanique de manière qu'une rotation du deuxième arbre entraîne la rotation du support par rapport à l'axe X2, le support portant en outre une deuxième surface de sortie sur laquelle est agencé l'objet entraîné suivant au moins deux mouvements de rotation combinés.

Dans un mode de réalisation préféré du dispositif selon la présente invention, celui-ci comporte un troisième arbre ainsi que des moyens de liaison mécanique supplémentaires pour permettre d'entraîner l'objet dans un mouvement de rotation sur lui-même.

Grâce à la structure du dispositif selon la présente invention, l'entraînement d'un objet suivant des mouvements de rotation complexes peut être réalisé facilement, avec une grande liberté de mouvement ainsi qu'une grande accessibilité de l'objet entraîné. En effet, l'environnement de l'objet n'est pratiquement pas encombré par la structure du dispositif dont tous les constituants se trouvent concentrés dans une même région autour de l'objet.

Un avantage supplémentaire du dispositif selon la présente invention réside dans le fait que, lorsque l'objet entraîné comprend un trou, les arbres de transmission des mouvements de rotation peuvent être creux et mis à profit pour transporter de la lumière ou de la matière au travers du dispositif jusqu'à l'objet. L'orientation de ce dernier détermine alors la direction d'éjection de la lumière ou de la matière. Le dispositif peut ainsi être mis en oeuvre sous la forme d'un dispositif d'illumination ou de propulsion d'un fluide, par exemple. On peut également prévoir que l'objet est une caméra vidéo susceptible de prendre quasiment n'importe quelle orientation.

### Brève description des figures

D'autres caractéristiques avantageuses de l'invention apparaîtront plus clairement à la lecture de la description qui suit, faite en référence au dessin annexé, dans lequel :
- la figure 1a est une vue latérale simplifiée du dispositif complet selon un mode de réalisation préféré de la présente invention,
- la figure 1 b est une vue similaire à celle de la figure 1a, avec un angle de vue orienté à 90 degrés par rapport à celui de la figure 1a,
- la figure 2 est une vue en coupe simplifiée du dispositif des figures précédentes, la coupe étant réalisée suivant un plan perpendiculaire au plan de la figure 1a et contenant la ligne A-A, et
- la figure 3 est une vue en coupe du dispositif des figures précédentes, la coupe étant réalisée suivant un plan perpendiculaire au plan de la figure 1 b et contenant la ligne B-B.

### Description détaillée d'un mode de réalisation préféré

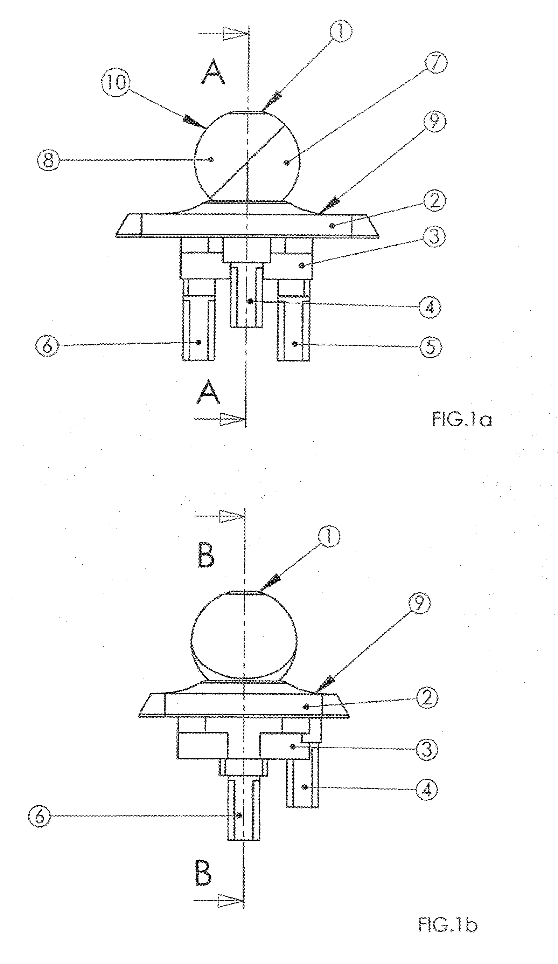

Les figures 1a et 1b représentent le dispositif d'entraînement selon un mode de réalisation préféré de l'invention, dans deux vues latérales simplifiées dont l'une est orientée à 90 degrés par rapport à l'autre. Dans ce mode de réalisation, décrit à titre non limitatif, le dispositif d'entraînement est destiné à transmettre un mouvement de rotation complexe à un objet 1, destiné à positionner une pièce à usiner, par exemple.

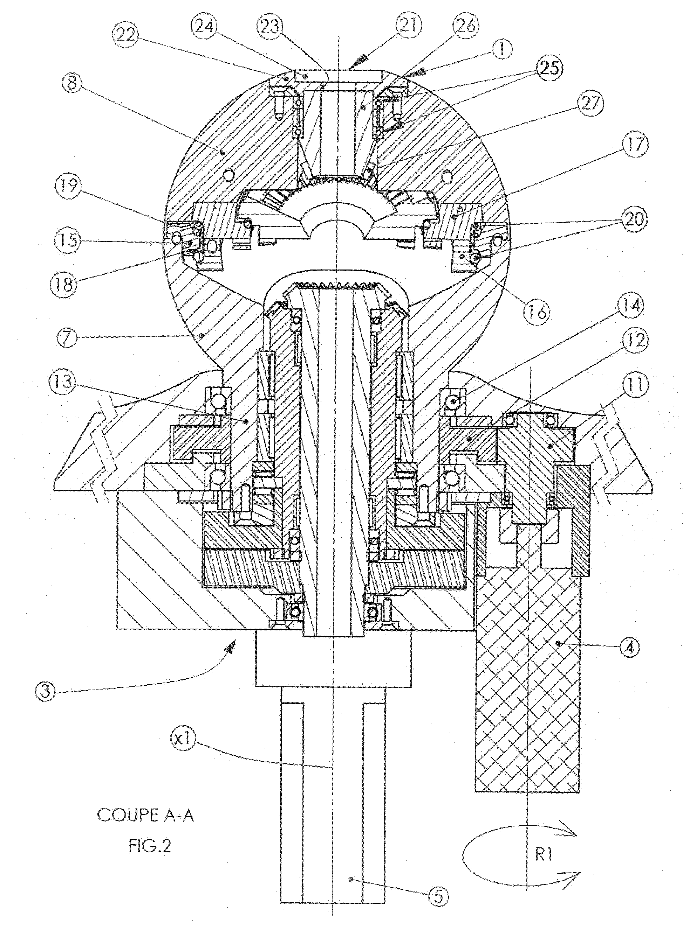

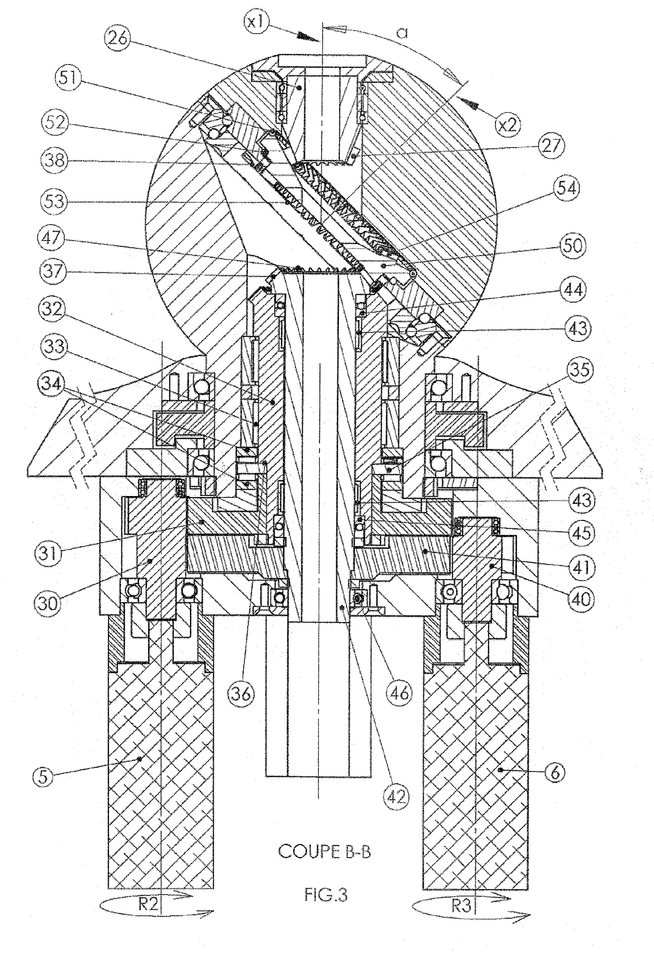

Le dispositif comporte un bâti 2 dans et sous lequel sont disposés des mécanismes d'entraînement 3, qui seront décrits plus loin en relation avec les figures 2 et 3, ainsi que trois moteurs 4, 5 et 6 indépendants et reliés aux mécanismes d'entraînement pour générer trois mouvements de rotation distincts (symbolisés respectivement par les double flèches référencées R1, R2 et R3 sur les figures 2 et 3).

Il convient de noter que l'homme du métier pourra mettre en oeuvre le dispositif décrit avec tout type de moteur connu et adapté pour remplir une fonction de génération de mouvements rotatifs, quelle que soit leur orientation, sans sortir du cadre de la présente invention.

Le bâti 2 est surmonté d'un élément sphérique divisé en une base 7 et une calotte 8 sphérique complémentaire, suivant un plan incliné par rapport à la face supérieure 9 du bâti.

L'objet 1 est porté par la surface 10 de la calotte 8. Celui-ci est représenté, sur les figures 1a et 1b, dans une position axiale, autrement dit, en étant disposé suivant un axe X1 passant par le centre de la sphère et perpendiculaire à la face supérieure du bâti.

Un premier mouvement de rotation du dispositif va à présent être exposé en relation avec la vue en coupe de la figure 2, réalisée suivant le plan perpendiculaire au plan de la figure 1a et contenant la ligne A-A.

Le moteur 4 est monté solidaire d'un pignon 11 engrenant avec les dents d'une première couronne 12 des mécanismes d'entraînement centrée par rapport à l'axe X1. La couronne 12 est montée solidaire d'un premier arbre creux 13, s'étendant entre la base 7 de l'élément sphérique et l'intérieur des mécanismes d'entraînement 3. L'arbre 13 est maintenu en position sur le bâti 2 au moyen de deux roulements à billes 14, de telle manière qu'une rotation R1 du pignon 11 entraîne la rotation de la base 7 de l'élément sphérique par rapport au bâti, via la couronne 12.

D'autre part, une bague 15, d'axe X2 coupant l'axe X1 en définissant un angle α (représenté sur la figure 3), est montée fixe sur la face supérieure de la base 7, au niveau de sa jonction avec la calotte 8. Une entretoise formée de deux anneaux concentriques 16 et 17 est retenue sur la bague 15 par deux épaulements 18 et 19 ménagés respectivement sur le premier et sur le deuxième anneau. Des billes 20 sont disposées entre la bague et l'entretoise pour permettre la libre rotation de l'une par rapport à l'autre. De manière préférée, un chemin de roulement (non visible) est usiné et rectifié dans chacun des anneaux 16 et 17 pour guider les billes 20.

L'entretoise est assemblée solidairement à la calotte 8 pour assurer la connexion mécanique, en rotation, entre cette dernière et la base 7.

La calotte 8 présente un trou 21 dans lequel est logé l'objet 1. Ce dernier comprend un disque 22 reposant sur un épaulement du trou 21, de dimensions légèrement supérieures. Le disque 22 présente un trou central 23 ainsi qu'un évidement 24, orienté en direction de l'extérieur et destiné à positionner une pièce à usiner, par exemple. En direction de l'intérieur de la calotte 8, le disque 22 est suivi de roulements à billes 25 ajustés dans le trou 21 et supportant un tube 26, solidaire du disque 22.

L'extrémité du tube 26 située à l'intérieur de l'élément sphérique comporte une denture d'engrenage 27 de type conique dont la fonction sera exposée en relation avec la description de la figure 3.

Des deuxième et troisième mouvements de rotation du dispositif vont à présent être exposés en relation avec la vue en coupe de la figure 3, réalisée suivant le plan perpendiculaire au plan de la figure 1 b et contenant la ligne B-B.

Le moteur 5 est monté solidaire d'un pignon 30 engrenant avec les dents d'une deuxième couronne 31 des mécanismes d'entraînement centrée par rapport à l'axe X1. La couronne 31 est montée solidaire d'un deuxième arbre creux 32, coaxial au premier arbre 13 et s'étendant, depuis les mécanismes d'entraînement 3, jusque dans la région centrale de l'élément sphérique. L'arbre 32 est maintenu en position sur le bâti 2 notamment au moyen de deux roulements à cylindres 33 ajustés à l'intérieur du premier arbre 13. Des roulements à cylindres 34 supplémentaires ont également été prévus pour supporter un anneau 35, comprimé entre un épaulement 36 de l'arbre 33 et la couronne 31, suivant la direction axiale. Grâce à cette construction, le deuxième arbre 32 est suspendu par des roulements pour être libre de tourner à la fois par rapport au bâti et par rapport au premier arbre 13.

D'autre part, l'extrémité du deuxième arbre 32 située à l'intérieur de l'élément sphérique est munie de dents d'engrenage 37 de type conique. Ces dents d'engrenage 37 sont disposées en prise avec les dents d'un engrenage 38 correspondant, également de type conique et ménagé sur la face de l'anneau 17 orientée en direction des mécanismes d'entraînement 3. Du fait que l'entretoise comprenant l'anneau 17 est montée sur la base 7 au moyen de billes 20, tel que décrit plus haut, une rotation du deuxième arbre 32 entraîne la rotation de la calotte 8, solidaire de l'entretoise, indépendamment de la base 7. Par conséquent, l'entraînement en rotation R2 du pignon 32 a pour seul effet de faire tourner la calotte 8 sur elle-même, soit autour de l'axe X2.

Le troisième moteur 6 est monté solidaire d'un pignon 40 engrenant avec les dents d'une troisième couronne 41 des mécanismes d'entraînement centrée par rapport à l'axe X1. La couronne 41 est montée solidaire d'un troisième arbre creux 42, coaxial aux premier et deuxième arbres 13 et 32 et s'étendant, depuis les mécanismes d'entraînement 3, jusque dans la région centrale de l'élément sphérique. L'arbre 42 est maintenu en position sur le bâti 2 notamment au moyen de deux roulements à cylindres 43 ajustés à l'intérieur du deuxième arbre 32. Des roulements à billes 44, 45 et 46 supplémentaires ont été prévus, en outre, pour assurer un bon positionnement et un bon maintien du troisième arbre 42, à la fois par rapport au deuxième arbre 32 et par rapport au bâti 2. Grâce à cette construction, le troisième arbre 42 est suspendu par des roulements pour être libre de tourner à la fois par rapport au bâti et par rapport au deuxième arbre 32 à l'intérieur duquel il est logé.

D'autre part, l'extrémité du troisième arbre 42 située à l'intérieur de l'élément sphérique est munie de dents d'engrenage 47 de type conique.

Un renvoi intermédiaire 50 à symétrie axiale d'axe X2 est positionné, via deux séries de billes 51 et 52, entre la calotte 8 et l'anneau 17 de l'entretoise. Des chemins de roulement (non visibles) sont également prévus, d'une part, entre la calotte 8 et le renvoi intermédiaire 50 et, d'autre part, entre l'anneau 17 et le renvoi intermédiaire pour améliorer la stabilité des séries de billes et la libre rotation d'axe X2 du renvoi intermédiaire par rapport à la calotte 8 et l'anneau 17.

Le renvoi intermédiaire 50 porte un premier engrenage 53, de type conique et orienté en direction des mécanismes d'entraînement 3, ainsi qu'un deuxième engrenage 54, également de type conique et orienté en direction de la surface 10 de la calotte 8.

L'agencement du renvoi intermédiaire 50 est tel que son premier engrenage 53 est en prise avec l'engrenage 47 du troisième arbre 42 tandis que son deuxième engrenage 54 est en prise avec l'engrenage 27 de l'objet 1.

Du fait que le renvoi intermédiaire 50 est monté sur la calotte 8 au moyen de billes 51, 52, tel que décrit plus haut, une rotation du troisième arbre 42 entraîne la rotation du renvoi intermédiaire, par rapport à l'axe X2. La rotation du renvoi intermédiaire entraîne à son tour celle de l'objet 1 par rapport à son axe de symétrie, confondu avec l'axe X1 dans la configuration représentée, indépendamment de la calotte 8. Par conséquent, l'entraînement en rotation R3 du pignon 40 a pour seul effet de faire tourner l'objet 1 sur lui-même.

Les matériaux employés pour la réalisation des différents constituants du dispositif qui vient d'être décrit peuvent être choisis dans une large gamme en fonction de l'application envisagée pour le dispositif, sans sortir du cadre de la présente invention.

Dans le cas d'une application nécessitant une bonne rigidité de l'ensemble ainsi qu'une bonne précision dans les chaînes cinématiques, la plupart des éléments seront préférablement réalisés en acier trempé, par exemple.

Pour des applications plus légères et nécessitant une précision des mouvements limitée, certains constituants du dispositif pourront être réalisés en matière plastique pour abaisser les coûts de fabrication.

De manière générale, il ressort de la description des figures qui précède que le dispositif selon la présente invention permet d'intégrer trois mouvements rotatifs indépendants dans un bâti relativement compact.

Les deux premiers mouvements de rotation indépendants R1 et R2 permettent de faire parcourir à l'objet 1 une surface représentant une portion de sphère. Il apparaît clairement des figures que l'étendue de cette surface par rapport à une sphère complète est fonction de la valeur de l'angle α. En outre, de manière préférée, l'angle défini entre l'axe de l'objet 1 et l'axe X2 est égal à l'angle α pour permettre de disposer l'objet 1 en n'importe quel point de la portion de sphère par la combinaison des deux mouvements R1 et R2, notamment suivant l'axe X1, tel que représenté. On peut noter que dans ce cas, l'axe de l'objet 1 et les axes X1 et X2 se coupent en un même point, à savoir le centre de l'élément sphérique.

En plus de son efficacité, le dispositif selon la présente invention procure une grande liberté dans les mouvements de l'objet 1 de même qu'un accès étendu à l'objet puisque les mécanismes d'entraînement 3 ainsi que les arbres rotatifs sont tous disposés dans une région très localisée du dispositif.

Le troisième mouvement R3, permettant de faire tourner l'objet 1 sur lui-même, est optionnel dans la mesure où il ne présente pas d'intérêt dans le cas d'applications du type dispositif d'illumination, caméra vidéo, ou encore du type dispositif de propulsion d'un fluide, mais plutôt pour des opérations d'usinage.

Dans ce dernier cas, on peut prévoir qu'un mandrin conventionnel est fixé sur l'objet 1 par des moyens adaptés connus de l'homme du métier. Ainsi, plusieurs outils différents, comme par exemple des fraises ou des embouts de vissage, peuvent êtres rendus solidaires du dispositif de manière simple et rapide, le passage de l'un à l'autre étant également facilité.

De manière préférée, on prévoit de commander numériquement les trois moteurs 4, 5 et 6 indépendamment les uns des autres pour obtenir des déplacements de l'objet rapides et précis. Le dispositif peut ainsi être adapté sans grande difficulté sur un centre d'usinage à commande numérique de type courant.

La description qui précède correspond à un mode de réalisation préféré de l'invention décrit à titre non limitatif. En particulier, les formes représentées et décrites pour les différents éléments constitutifs du dispositif ne sont pas limitatives.

Les moyens de liaison mécaniques décrits et représentés sous la forme d'engrenages peuvent être remplacés par tout autre type de liaison mécanique adapté, comme par exemple des contacts par friction, sans sortir du cadre de la présente invention.

La présente invention n'est pas limitée à la disposition d'un seul objet 1 sur la calotte 8. L'homme du métier pourra disposer une pluralité d'objets similaires ou différents sans grande difficulté, éventuellement répartis de manière régulière. Dans le cas d'un dispositif mis en oeuvre pour effectuer des opérations d'usinage, par exemple, on pourra mettre plusieurs objets similaires dont l'un porte une pièce en cours d'usinage pendant qu'un autre est chargé d'une nouvelle pièce à usiner et un troisième est déchargé d'une pièce qui vient d'être usinée.

Par ailleurs, on peut également prévoir, par exemple, que le renvoi intermédiaire et la calotte présentent chacun une forme allongée, l'objet portant lui-même un engrenage supplémentaire pour entraîner un objet supplémentaire en rotation. On peut prévoir plusieurs étages successifs basés sur ce même principe pour réaliser un bras robotisé comportant une pluralité d'articulations et dont l'extrémité libre porte un objet rotatif.

## Revendications

1. Dispositif d'entraînement d'un objet (1) suivant au moins deux mouvements (R1, R2) de rotation combinés, **caractérisé en ce qu'**il comporte:
- un premier arbre (13) creux d'axe X1 destiné à être entraîné en rotation par rapport audit axe X1 par des premiers moyens moteur (4), ledit premier arbre présentant une première extrémité libre (7) portant une première surface de sortie sensiblement plane, de contour général circulaire, et orientée perpendiculairement à un axe X2 coupant ledit axe X1 en définissant un angle α,
- un deuxième arbre (32) d'axe X1, agencé à l'intérieur dudit premier arbre (13) et destiné à être entraîné par des deuxièmes moyens moteur (5) pour tourner par rapport audit axe X1, indépendamment dudit premier arbre, ledit deuxième arbre (32) comprenant une deuxième extrémité libre portant une deuxième surface de sortie présentant des premiers moyens de liaison mécanique (37), et
- un support (8) monté libre en rotation sur ladite première surface de sortie et présentant une première surface d'entrée (16, 17), symétrique par rapport audit axe X2, portant des deuxièmes moyens de liaison mécanique (38) agencés relativement auxdits premiers moyens de liaison mécanique (37) de manière qu'une rotation dudit deuxième arbre (32) entraîne la rotation dudit support (8) par rapport audit axe X2, ledit support portant en outre une deuxième surface de sortie (10) sur laquelle est agencé ledit objet (1).

2. Dispositif selon la revendication 1, **caractérisé en ce que** ladite première surface de sortie et ledit support sont reliés par un palier (20).

3. Dispositif selon la revendication 1 ou 2, **caractérisé en ce que** lesdits premiers et deuxièmes moyens de liaison mécanique comprennent respectivement des premier et deuxième engrenages (37, 38) complémentaires de type conique.

4. Dispositif selon l'une quelconque des revendications précédentes, dans lequel ledit objet (1) est monté libre en rotation sur la surface de sortie (10) dudit support, **caractérisé en ce qu'**il comporte :
un troisième arbre (42) d'axe X1, de diamètre plus faible que celui dudit premier arbre (13), agencé de manière coaxiale par rapport auxdits premier et deuxième arbres (13, 32) et destiné à être entraîné par des troisièmes moyens moteur (6) pour tourner autour dudit axe X1, indépendamment desdits premier et deuxième arbres, ledit troisième arbre comprenant une troisième surface de sortie portant des troisièmes moyens de liaison mécanique (47), et
un renvoi intermédiaire (50), symétrique par rapport audit axe X2 et monté libre en rotation autour de ce dernier dans ledit support (8), ledit renvoi intermédiaire portant, d'une part, des quatrième moyens de liaison mécanique (53) agencés relativement auxdits troisièmes moyens de liaison mécanique (47) de manière qu'une rotation dudit troisième arbre (42) entraîne la rotation dudit renvoi intermédiaire (50) par rapport audit axe X2 et, d'autre part, des cinquièmes moyens de liaison mécanique (54) agencés relativement à des sixièmes moyens de liaison mécanique (27) portés par ledit objet (1) de manière qu'une rotation dudit renvoi intermédiaire entraîne la rotation dudit objet sur lui-même.

5. Dispositif selon la revendication 4, **caractérisé en ce que** ledit deuxième arbre (32) est creux et **en ce que** ledit troisième arbre (42) est logé à l'intérieur dudit deuxième arbre.

6. Dispositif selon la revendication 4 ou 5, **caractérisé en ce que** lesdits troisièmes, quatrièmes, cinquièmes et sixièmes moyens de liaison mécanique (47, 53, 54, 27) sont des engrenages de type conique.

7. Dispositif selon l'une quelconque des revendications précédentes, **caractérisé en ce que** chacun desdits arbres est solidaire d'une portée (12, 31, 41) radiale distante dudit support (8) et portant un engrenage destiné à être entraîné par lesdits moyens moteur (4, 5, 6) correspondants.

8. Dispositif selon l'une quelconque des revendications précédentes, **caractérisé en ce qu'**un axe passant par ledit objet (1) et le point d'intersection desdits axes X1 et X2 définit un angle sensiblement égal audit angle α par rapport audit axe X2.

9. Dispositif selon l'une quelconque des revendications précédentes, **caractérisé en ce que** ledit objet (1) comporte des moyens de positionnement ou de préhension destinés à loger ou à tenir un élément nécessitant d'être entraîné dans des mouvements de rotations combinés.

10. Dispositif selon l'une quelconque des revendications 4 à 8, **caractérisé en ce que** ledit support (8) et ledit renvoi intermédiaire (50) comprennent respectivement des arbres coaxiaux d'axe X2, ladite deuxième surface étant montée libre en rotation sur ledit support et étant solidaire d'un support supplémentaire, dans lequel un objet supplémentaire est monté libre en rotation, ce dernier comprenant des septièmes moyens de liaison mécanique agencés pour coopérer avec des huitièmes moyens de liaison mécanique dudit objet, de manière qu'une rotation dudit troisième arbre entraîne la rotation dudit objet supplémentaire.

11. Dispositif selon l'une quelconque des revendications 1 à 3, **caractérisé en ce que** ledit objet comprend un trou (23) pour permettre le passage de lumière ou de matière depuis au moins une extrémité de l'un desdits arbres éloignée dudit objet.

12. Dispositif d'illumination comportant un dispositif d'entraînement selon la revendication 11 associé à une source lumineuse émettant de la lumière à travers au moins l'un desdits arbres suivant ledit axe X1, l'orientation dudit objet définissant la direction de sortie de la lumière hors du dispositif.

13. Dispositif de propulsion d'un fluide comportant un dispositif d'entraînement selon la revendication 11 associé à une source d'approvisionnement d'un fluide émettant ledit fluide sous pression à travers au moins l'un desdits arbres suivant ledit axe X1, l'orientation dudit objet définissant la direction de propulsion dudit fluide hors du dispositif.

14. Dispositif selon l'une quelconque des revendications précédentes, **caractérisé en ce qu'**il comporte en outre un bâti (2) dans lequel sont logés au moins deux moteurs (4, 5) dont chacun est agencé pour entraîner en rotation l'un desdits arbres (13, 32).
